# EUROPÄISCHE PATENTSCHRIFT

(11) **EP 2 194 008 B1**
(45) Veröffentlichungstag und Bekanntmachung des Hinweises auf die Patenterteilung: **08.06.2016**
(21) Anmeldenummer: 08002540.6
(22) Anmeldetag: 12.02.2008
(51) Int. Cl.: B65G 1/137, B65G 1/04

(54) **Verfahren und Vorrichtung zum Einlagern von Arzneimittelpackungen**
Method and device for storing packets of medicine
Procédé et dispositif de stockage de boîtes de médicaments

(30) Priorität: 12.02.2007 DE 102007007411
(43) Veröffentlichungstag der Anmeldung: 09.06.2010
(73) Patentinhaber: Marquardt & Partner GbR, 14195 Berlin (DE)
(72) Erfinder: Marquardt, Michael, 10623 Berlin (DE); Göricke, Peter, 14195 Berlin (DE)
(74) Vertreter: Behrendt, Arne

(56) Entgegenhaltungen:
- DE-A1- 4 318 341
- DE-A1- 10 225 332
- DE-A1- 19 857 282
- DE-A1-102004 013 353
- DE-U1-202004 015 264

## Beschreibung

Die Erfindung betrifft eine Vorrichtung nach dem Gattungsbegriff des Patentanspruchs 1.

Eine derartige Vorrichtung ist aus der DE 198 57 282 A1 bekannt. Die bekannte Vorrichtung verwendet für die Handhabung der einzelnen Arzneimittelpackungen einen Gelenkroboter mit fünf oder mehr Freiheitsgraden und ist allein schon aus diesem Grund technisch sehr aufwendig und dementsprechend kostspielig. Die vielen Bewegungsfreiheitsgrade des Gelenkroboters sind bei diesem Stand der Technik notwendig, weil dort der Greifheber jede aus dem Sammelbehälter herausgehobene Arzneimittelpackung auf einer Referenzfläche zwecks Vermessung ausrichten muss, danach mit allen sechs Seiten des Quaders vor eine Scanner-Einrichtung und anschließend vor eine Digitalkamera halten muss und abschließend noch in ein rechnergesteuertes Apothekenlager transportieren und dort ablegen muss. Da die oben dargelegten Schritte zwangsläufig zeitlich aufeinanderfolgen, ergibt sich insgesamt eine sehr zeitraubende Arbeitsweise, die für die schnelle Einlagerung von größeren Mengen an Arzneimittelpackungen ungeeignet ist.

Ein anderes Verfahren zur Vereinzelung von Arzneimittelpackungen vor der Eingabe in ein rechnergesteuertes Apothekenlaber ist beispielsweise aus der vorveröffentlichten DE 10 2005 044 925 A1 bekannt. Bei diesem bekannten Verfahren wird der Inhalt der einzelnen Sammelbehälter in eine Kippmulde abgeworfen, von wo aus sie mit einem Stollenbandförderer abgezogen werden. Dem Stollenbandförderer ist ein Vereinzelungsförderer nachgeschaltet, der die vom Stollenbandförderer abgeworfenen Arzneimittelpackungen von einander separieren sollen. Die voneinander separierten Arzneimittelpackungen werden sodann mit geeigneten Hilfsmitteln identifiziert und dem rechnergesteuerte Apothekenlager zugeführt.

Diese bekannte Vorrichtung hat den Vorteil, dass die zuvor manuell vorgenommene Vereinzelung und Einlagerung der Arzneimittelpackungen in das Einlagerungssystem entfallen kann. Das Einlagern erfolgt selbsttätig - auch bei Nacht - ohne dass kostbare Arbeitszeit eingesetzt werden muss.

Die zuletzt genannte Vorrichtung hat allerdings den Nachteil, dass die Arzneimittelpackungen mechanisch außerordentlich stark belastet werden, so dass es verhältnismäßig oft zu beschädigten Packungen kommt, die von der Kundschaft nicht akzeptiert werden. Außerdem macht die Beschädigung der Packungen bisweilen auch die Beschriftung oder die auf den Arzneimittelpackungen befindlichen Barcodes unlesbar, so dass die Gefahr einer Fehleinlagerung besteht.

Es ist Aufgabe der Erfindung, die Vorrichtung gemäß Gattungsbegriff des Patentanspruchs 1 technisch zu vereinfachen und zugleich den Arbeitsablauf der Einlagerung von Arzneimitteln in ein rechnergesteuertes Apothekenlager zu beschleunigen.

Gegenstand der Erfindung ist eine Vorrichtung zum Entnehmen von ggf. ungeordnet in Sammelbehältern angelieferten Arzneimittelpackungen und zur Weitergabe dieser Arzneimittelpackungen in ein rechnergesteuertes Apothekenlager mit den Merkmalen des Patentanspruchs 1.

Die Vorrichtung gemäß der Erfindung ermittelt zunächst die Position und die Abmessung der einzelnen in dem Sammelbehälter liegenden Arzneimittelpackungen, so dass der Greifheber, der als Saugheber ausgebildet ist, schonend auf die einzelnen Packungen zugreifen kann, so dass eine Beschädigungsgefahr nahezu ausgeschlossen ist. Die einzelnen Arzneimittelpackungen können sogar übereinander angeordnet sein. In diesem Fall räumt der Greifheber zunächst die oberste Schicht der in dem Sammelbehälter liegenden Arzneimittelpackungen ab. Sodann wird mit der Scanner-Kamera ein weiterer Scan durchgeführt und ausgewertet, um anschließend die nächste Schicht von Arzneimittelpackungen abzuräumen.

In der Übergabestation kommen die Arzneimittelpackungen einzeln an und können dort sorgfältig vermessen werden, um die für die Einlagerung erforderlichen Daten zu gewinnen. Zusätzlich können die an der Oberfläche befindlichen Beschriftungen und Barcodes gelesen werden, so dass das Arzneimittel sicher und redundant im Hinblick auf die pharmazeutische Zentralnummer, das Verfallsdatum etc. identifiziert werden kann. Da der Greifheber mit dieser Vermessung und Identifizierung der Arzneimittelpackungen nichts zu tun hat, kann er während der Vermessung und Identifizierung bereits die nächste Arzneimittelpackung aufsuchen und greifen.

Um größere Mengen an Arzneimittelpackungen durchsetzen zu können, weist die Vorrichtung eine Vielzahl von Sammelbehältern auf, die schubladenartig ausgebildet sind und in Schubladenregalen angeordnet sind, denen ein Schubladenlift zugeordnet ist, der die noch vollen Schubladen in eine Position unterhalb der Scannerkamera bewegt und die geleerten Schubladen in das Schubladenregal zurück stellt.

Der für die Vorrichtung gemäß der Erfindung verwendete Greifheber ist in horizontaler Ebene beweglich oberhalb des im Schubladenlift befindlichen Sammelbehälters und oberhalb der Übergabestation an einer rechnergesteuerten Führungsvorrichtung befestigt und relativ zu dieser vertikal verfahrbar, wobei dem unteren Ende des Greifhebers einerseits ein Wegbegrenzungsschalter zugeordnet ist, der die vertikale Verschiebung des Greifhebers in Richtung auf die Arzneimittelpackung bei Erreichen der Arzneimittelpackung beendet, und andererseits ein der Fixierung von Arzneimittelpackungen dienender Saugkopf zugeordnet ist, der über ein im Greifheber befindliches Saugrohr an ein Vakuum anschließbar ist und um die Längsachse des Greifhebers verdrehbar ist.

Ein solcher mit einem Saugkopf zum Fixieren der Arzneimittelpackung ausgerüsteter Greifheber kommt mit einem Minimum an beweglichen Teilen aus. Die horizontalen Bewegungswege dieses Greifhebers oberhalb der Arzneimittelpackungen im Sammelbehälter und im Bereich der Übergabestation können mit einer einfachen, rechnergesteuerten Vorrichtung gesteuert werden, wobei unter anderem die von der Kamera gewonnenen Daten über die Lage und die Geometrie der einzelnen Arzneimittelpackungen verwendet werden. Der vertikale Bewegungsweg in Richtung auf die Arzneimittelpackung wird sodann von einem Wegbegrenzungsschalter begrenzt, der mit Berührung der Arzneimittelpackung oder auch berührungslos arbeiten kann. Die Verwendung eines solchen Wegbegrenzungsschalters macht es weitgehend überflüssig, mit der Kamera dreidimensionale Daten über die Lage der Arzneimittelpackungen zu gewinnen. Dementsprechend kommt man mit einer einfachen 2D-Kamera aus.

Die Übergabestation weist zweckmäßig eine lichtdurchlässige, von unten beleuchtete Ablageplatte auf, auf welcher die Arzneimittelpackungen während ihrer Vermessung und/oder Identifizierung aufliegen. Eine derart beleuchtete Ablageplatte erleichtert die Vermessung und/oder die Schrift-, Bild- oder Barcodeerkennung außerordentlich.

Um dem nachgeschalteten automatischen Handhabungssystem des Apothekenlagers die einzelnen Arzneimittelpackungen immer in der richtigen Position übergeben zu können, ist weiterhin vorgesehen, dass die Übergabestation einen Übergabeboden aufweist, der im Querschnitt V-förmig ausgebildet ist, wobei die Schenkel des V einen rechten Winkel bilden und der Übergabeboden derart verschwenkbar gelagert ist, dass der eine oder der andere Schenkel des V horizontal verläuft und dass - für die Übergabe an das Apothekenlagersystem oder die Übernahme aus dem Apothekenlagersystem - beide Schenkel mit 45° geneigt gegen die Horizontale verlaufen. Mit einem derartigen Übergabeboden kann man auf einfache Art und Weise quaderförmige Arzneimittelpackungen von der Hochkantstellung in die Flachstellung verbringen und umgekehrt. Außerdem ermöglicht ein solcher Übergabeboden die lagegerechte Übergabe in das Handhabungssystem des Apothekenlagers, wenn dieses ebenfalls mit V-förmigen Böden arbeitet, wie dies aus der parallelen europäischen Patentanmeldung 2 090 529 A1 des Anmelders hervorgeht. Diese Ausgestaltung des Übergabebodens ist insbesondere auch dann vorteilhaft, wenn Arzneimittelpackungen aus dem Apothekenlager über das Einlagerungssystem gemäß der Erfindung zurück in die Sammelbehälter verbracht werden sollen.

Eine weitere vorteilhafte Weiterbildung der Erfindung sieht vor, dass der Übergabeboden aus lichtdurchlässigem, von unten beleuchteten Material besteht und zugleich als Vermessungs- und Identifikationsstation dient. Bei der Verwendung eines derart ausgestalteten Übergabebodens wird die oben erläuterte lichtdurchlässige Ablageplatte überflüssig.

Ein Ausführungsbeispiel der Erfindung wird im Folgenden anhand der Zeichnung näher erläutert. Es zeigen:
- Fig. 1:: Schematisch und perspektivisch eine Vorrichtung gemäß der Erfindung;
- Fig. 2:: einen Scan von in dem Sammelbehälter angeordneten Arzneimittelpackungen;
- Fig. 3:: schematisch den Greifheber in Seitenansicht und den Übergabeboden im Schnitt.

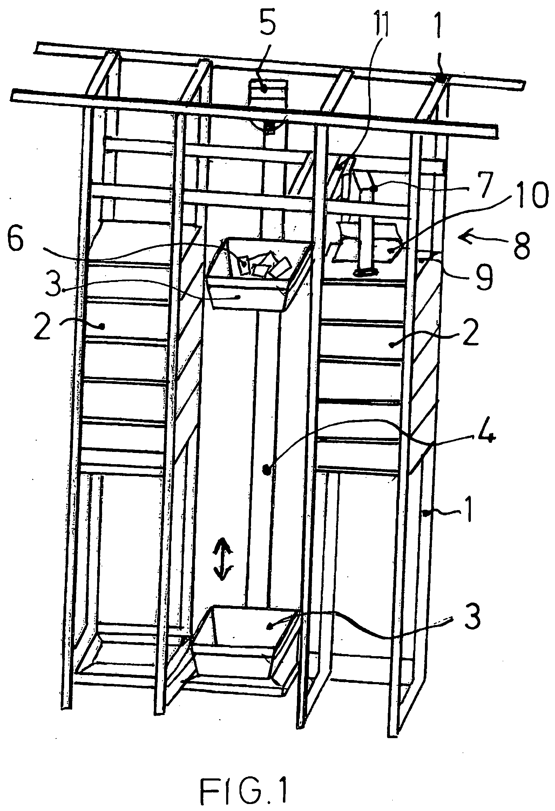

Figur 1 zeigt ein modular aufgebautes Schubladenregal 1 mit einer Vielzahl von Schubladenaufnahmen 2, in die Schubladen 3 eingeschoben werden können. Diese Schubladen 3 dienen als Sammelbehälter für die Anlieferung von Arzneimittelpackungen vom Großhändler zur Apotheke. Den Schubladenaufnahmen 2 ist ein Schubladenlift 4 zugeordnet, der zum Herausziehen und zum Einschieben der einzelnen Schubladen 3 in die Schubladenaufnahmen 2 dient und darüber hinaus jede einzelne Schublade unter eine Scannerkamera 5 verfahren kann, die sich oben am Schubladenregal 1 befindet.

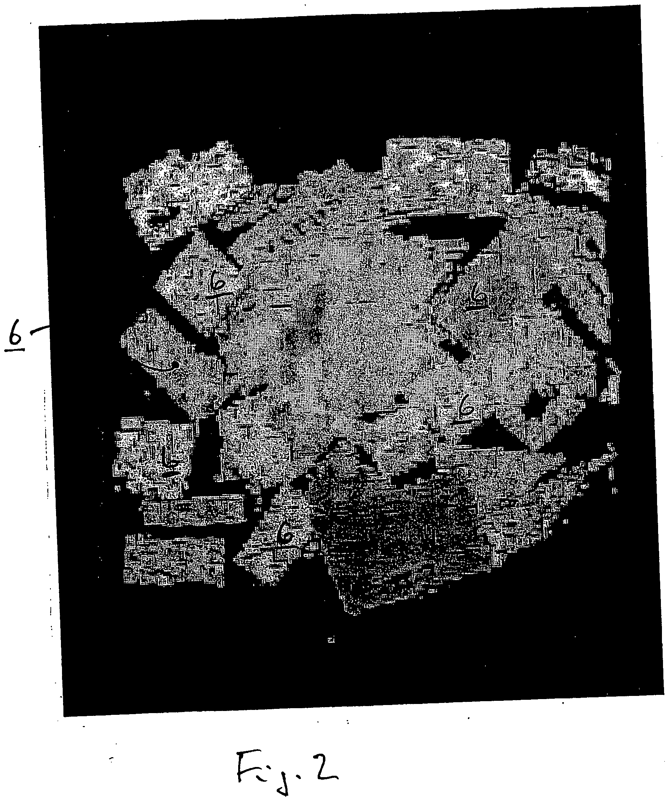

Mit dieser Scannerkamera 5 kann ein Bild der in der jeweiligen Schublade 3 liegenden Arzneimittelpackungen 6 angefertigt werden. Ein solches Bild ist beispielsweise in Figur 2 dargestellt.

Anhand dieses Bildes können mit einer geeigneten Software die Position und die Größe der einzelnen Arzneimittelpackungen bestimmt werden. Anhand dieser Daten hebt ein rechnergesteuerter Greifheber 7, der beispielsweise als Saugheber ausgebildet sein kann, die einzelnen Arzneimittelpackungen 6 aus der Schublade 3 (Sammelbehälter) heraus und führt sie einer Übergabestation 8 zu, in der die Arzneimittelpackungen 6 vermessen und anhand ihrer Beschriftung (Barcodes) identifiziert werden. Hierzu weist die Übergabestation 8 eine von unten beleuchtete, lichtdurchlässige Ablageplatte 9 auf, auf welcher die Arzneimittelpackungen 6 während ihrer Vermessung und/oder Identifizierung aufliegen. Für die Vermessung und/oder Identifizierung sind zusätzlich in der Zeichnung nicht näher dargestellte Mess- und Lesevorrichtungen vorgesehen. Weiterhin ist die Übergabestation 8 mit einem Übergabeboden 10 versehen. Dieser Übergabeboden 10 übergibt die identifizierten und vermessenen Arzneimittelpackungen 6 an ein nachgeschaltetes, in der Zeichnung nicht dargestelltes Handhabungssystem eines rechnergesteuerten Apothekenlagers.

Wenn in der Übergabestation 8 ausnahmsweise eine Arzneimittelpackung 6 nicht eindeutig identifiziert werden kann, wird diese mittels des Greifhebers 7 wieder in die Schublade 3 (Sammelbehälter) zurückgeworfen. Alternativ kann diese Arzneimittelpackungen 6 auch mittels des Greifhebers 7 in einem in der Zeichnung nicht dargestellten Aussortierbehälter abgeworfen werden.

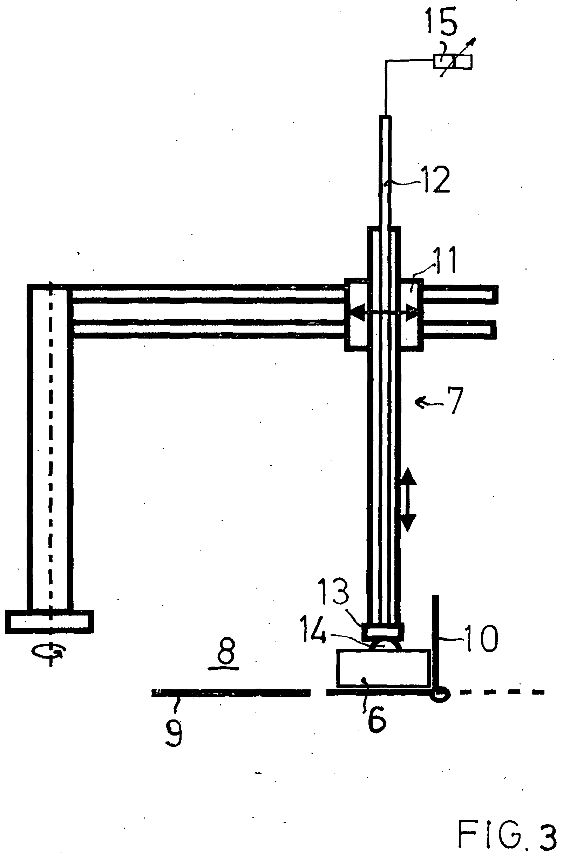

Wie insbesondere aus Figur 3 ersichtlich ist, ist der Übergabeboden 10 im Querschnitt V-förmig ausgebildet, wobei die Schenkel des V einen rechten Winkel bilden. Dabei ist der Übergabeboden 10 derart verschwenkbar gelagert, dass der eine oder der andere Schenkel des V horizontal verläuft öder dass beide Schenkel mit 45° gegen die Horizontale geneigt und nach oben offen verlaufen. In der zuletzt genannten Stellung korrespondiert der V-förmige Übergabeboden 10 mit den Böden der Aufnahme- und Regalfächer eines nachgeschalteten automatischen Handhabungssystems eines Apothekenlagers, wie es beispielsweise in der parallelen europäischen Patentanmeldung 2 090 529 A1 der gleichen Anmelderin beschrieben ist.

Die Übergabestation 10 kann ggf. auch aus lichtdurchlässigem und von unten beleuchtetem Material bestehen, so dass die oben erläuterte Vermessung und Identifizierung der Arzneimittelpackungen ggf. auch direkt auf dem Übergabeboden erfolgen können.

In Figur 3 sind schließlich noch der Aufbau und die Funktionsweise des Greifhebers 7 dargestellt. Dieser Greifheber 7 ist an einer Führungseinrichtung 1 befestigt, mit welcher die jeweils benötigte Position des Greifhebers 7 in der horizontalen Ebene angesteuert werden kann. Der Greifheber 7 selbst ist vertikal verschiebbar an dieser Führungsvorrichtung 11 gelagert und enthält ein um seine Längsachse verdrehbar gelagertes Saugrohr 12, an dessen unterem Ende ein Saugkopf 13 mit einem Saugnapf 14 befestigt ist. Der Saugnapf 14 dient zum Ansaugen und Festhalten von Arzneimittelpackungen 6 während der Handhabung in der Einlagerungsvorrichtung gemäß der Erfindung. Hierzu ist der Saugnapf 14 über das Saugrohr 12 und ein pneumatisches Schaltventil 15 mit einem nicht näher dargestellten Vakuum verbindbar.

Außerdem ist der Greifheber 7 mit einem Wegbegrenzungsschalter versehen, der den Vorschub des Greifers nach unten begrenzt, wenn die jeweilige Arzneimittelpackung erreicht ist und angesaugt werden kann.

## Patentansprüche

1. Vorrichtung zum Entnehmen von ggf. ungeordnet in Sammelbehältern (3) angelieferten Arzneimittelpackungen (6) und zur Weitergabe dieser Arzneimittelpackungen (6) an ein rechnergesteuertes Apothekenlager mit
- einer Scanner-Kamera (5), die ein Bild von den noch im Sammelbehälter (3) befindlichen Arzneimittelpackungen (6) herstellt,
- einem Greifheber (7), der anhand des jeweils von der Scanner-Kamera (5) hergestellten Bildes rechnergesteuert die einzelnen Arzneimittelpackungen (6) aus dem Sammelbehälter (3) heraushebt und
- einer Vermessungs- und Leseeinrichtung zur Vermessung der einzelnen Arzeimittelpackungen (6), und zur Identifizierung der einzelnen Arzeimittelpackungen (6) anhand ihrer Beschriftung,
**dadurch gekennzeichnet, dass** die Scanner-Kamera (5) oben an einem Schubladenregal (1) angeordnet ist, welches als Sammelbehälter (3) dienende Schubladen (3) und einen Schubladenlift (4) enthält, mit welchem die noch vollen Schubladen (3) des Schubladenregals (1) in eine Position unter der Scanner-Kamera (5) bewegbar und die jeweils geleerten Schubladen (3) in das Schubladenregal (1) zurückstellbar sind,
- dass der Greifheber (7) oberhalb des im Schubladenlift (4) befindlichen Sammelbehälters (3) und oberhalb einer Übergabestation (8) in horizontaler Ebene beweglich an einer rechnergesteuerten Führungsvorrichtung (11) befestigt ist und relativ zu dieser vertikal verschiebbar ist, wobei dem unteren Ende des Greifhebers (7) einerseits ein Wegbegrenzungsschalter zugeordnet ist, der eine vertikale Verschiebung des Greifhebers (7) in Richtung auf die Arzneimittelpackungen (6) bei Erreichen der zu ergreifenden Arzneimittelpackung (6) beendet, und andererseits ein der Fixierung von Arzneimittelpackungen (6) dienender Saugkopf (14) zugeordnet ist, der über ein im Greifheber (7) befindliches Saugrohr (12) an ein Vakuum anschließbar ist und um die Längsachse des Greifhebers (7) verdrehbar ist, so dass der rechnergesteuerte Greifheber (7) die einzelnen Arzneimittelpackungen (6) aus dem Sammelbehälter herausheben und der Übergabestation (8) zuführen kann,
- und dass der Übergabestation (8) die Vermessungs- und Leseeinrichtung zur Vermessung und Identifizierung der in der Übergabestation (8) befindlichen Arzneimittelpackung (6) sowie eine Übergabeeinrichtung (10) zur Übergabe der vermessenen und identifizierten Arzneimittelpackung (6) an ein nachgeschaltetes, rechnergesteuertes Apothekenlager zugeordnet sind.

2. Vorrichtung nach Anspruch 1, **dadurch gekennzeichnet, dass** die Übergabestation (8) eine lichtdurchlässige und von unten beleuchtete Ablageplatte (9) aufweist, auf welcher die Arzneimittelpackungen (6) während ihrer Vermessung und Identifizierung aufliegen.

3. Vorrichtung nach den Ansprüchen 1 und 2, **dadurch gekennzeichnet, dass** die Übergabeeinrichtung (10) einen Ubergabeboden (10) aufweist, der im Querschnitt V-förmig ausgebildet ist, wobei die Schenkel des V einen rechten Winkel bilden und der Übergabeboden (10) derart schwenkbar gelagert ist, dass der eine oder andere Schenkel des V horizontal verläuft, oder dass - für die Übergabe an das Apothekeneinlagerungssystem oder die Übernahme aus dem Apothekeneinlagerungssystem - beide Schenkel mit 45° geneigt gegen die Horizontale verlaufen.

4. Vorrichtung nach Anspruch 3, **dadurch gekennzeichnet, dass** der Übergabeboden (9) aus lichtdurchlässigem, von unten beleuchteten Material besteht und zugleich als Vermessung- und Identifikationsstation dient.

## Claims

1. Apparatus for removing drug packs (6) delivered possibly randomly in collecting containers (3) and for passing said drug packs (6) to a computer-controlled pharmacy store comprising:
- a scanner camera (5) which produces an image of the drug packs (6) still in the collecting container (3),
- a gripping lifter (7) which lifts the individual drug packs (6) out of the collecting container (3) under computer control on the basis of the image respectively produced by the scanner camera (5), and
- a measuring and reading device for measuring the individual drug packs (6) and for identifying the individual drug packs (6) by means of their labelling,
**characterised in that** the scanner camera (5) is arranged upwardly on a drawer shelf arrangement (1) which contains drawers (3) serving as collecting containers (3) and a drawer lift (4) with which the still full drawers (3) of the drawer shelf arrangement (1) are moveable into a position under the scanner camera (5) and the respectively emptied drawers (3) are moveable back into the drawer shelf arrangement (1),
- the gripping lifter (7) is fixed moveably in a horizontal plane above the collecting container (3) disposed in the drawer lift (4) and above a transfer station (8) to a computer-controlled guide device (11) and is vertically displaceable relative thereto, wherein associated with the lower end of the gripping lifter (7) is on the one hand a travel limit switch which terminates a vertical displacement of the gripping lifter (7) in a direction towards the drug packs (6) when the drug pack (6) to be gripped is reached and on the other hand a suction head (14) which serves for fixing the drug packs (6) and which can be connected to a vacuum by way of a suction tube (12) in the gripping lifter (7) and is rotatable about the longitudinal axis of the gripping lifter (7) so that the computer-controlled gripping lifter (7) can lift the individual drug packs (6) out of the collecting container and feed same to the transfer station (8), and
- associated with the transfer station (8) are the measuring and reading device for measuring and identifying the drug pack (6) in the transfer station (8) and a transfer device (10) for transfer of the measured and identified drug pack (6) to a downstream-disposed computer-controlled pharmacy store.

2. Apparatus according to claim 1 **characterised in that** the transfer station (8) has a translucent deposit plate (9) which is illuminated from below and on which the drug packs (6) are disposed during their measurement and identification.

3. Apparatus according to claims 1 and 2 **characterised in that** the transfer device (10) has a transfer plate member (10) which is of V-shaped cross-section, wherein the limbs of the V-shape form a right angle and the transfer plate member (10) is mounted pivotably in such a way that the one limb or the other of the V-shape extends horizontally or that - for transfer to the pharmacy storage system or for removal from the pharmacy storage system - both limbs extend inclined at 45° relative to the horizontal.

4. Apparatus according to claim 3 **characterised in that** the transfer plate member (9) comprises translucent material illuminated from below and serves at the same time as a measurement and identification station.

## Revendications

1. Dispositif d'extraction de boîtes de médicaments (6) livrées éventuellement sans ordre dans des collecteurs (3), et pour transférer ensuite ces boîtes de médicaments (6) dans un entrepôt de produits pharmaceutiques commandé par ordinateur, ayant :
- une scanner-appareil photo (5), qui produit une image des boîtes de médicaments (6) se trouvant encore dans le collecteur (3),
- un dispositif de préhension et de levage (7) qui, à l'aide de l'image produite par le scanner-appareil photo (5), enlève d'une manière commandée par ordinateur les boîtes de médicaments (6) individuelles du collecteur (3), et
- un dispositif de mesure et de lecture pour mesurer les boîtes de médicaments individuelles (6), et pour identifier les boîtes de médicaments individuelles (6) à l'aide de leur étiquette,
**caractérisé en ce que** le scanner-appareil photo (5) est disposé au-dessus d'un rayonnage à tiroirs (1), lequel rayonnage à tiroirs (1) sert de collecteur (3) et comprend un dispositif de levage de tiroir (4) grâce auquel les tiroirs (3) encore inutilisés du rayonnage à tiroirs (1) peuvent être déplacés jusque dans une position sous le scanner-appareil photo (5), et les tiroirs vides respectifs (3) peuvent être remis dans le rayonnage à tiroirs (1),
**en ce que** le dispositif de préhension et de levage (7) est fixé sur un dispositif de guidage (11) mobile jusqu'au-dessus du collecteur (3) se trouvant dans le dispositif de levage de tiroir (4) et au-dessus d'un poste de transfert (8) dans un plan horizontal, et peut être déplacé par verticalement par rapport à celui-ci, dans lequel un commutateur de limitation de course est agencé d'un côté sous l'extrémité inférieure du dispositif de préhension et de levage (7), qui met fin au déplacement vertical du dispositif de préhension et de levage (7) en direction des boîtes de médicaments (6) en atteignant la boîte de médicaments (6) devant être saisie, tandis que d'un autre côté est agencée une tête aspirante (14) servant à stabiliser les boîtes de médicaments (6), qui peut être verrouillée à l'aide d'un vide via un tuyau d'aspiration (12) dans le dispositif de préhension et de levage (7), et qui peut être mise en rotation autour de l'axe longitudinal du dispositif de préhension et de levage (7), de sorte que le dispositif de préhension et de levage (7) commandé par ordinateur peut sortir les boîtes de médicaments individuelles (6) du collecteur et les guider jusqu'au poste de transfert (8),
- et **en ce que** sont agencés, dans le poste de transfert (8), le dispositif de mesure et de lecture pour mesurer et identifier la boîte de médicaments (6) se trouvant dans le poste de transfert (8), ainsi qu'un dispositif de transfert (10) pour transférer la boîte de médicaments (6) mesurée et identifiée vers un entrepôt de produits pharmaceutiques commandé par ordinateur situé en aval.

2. Dispositif selon la revendication 1, **caractérisé en ce que** le poste de transfert (8) présente une plaque de dépose (9) translucide et éclairée par le dessous, sur laquelle séjournent les boîtes de médicaments (6) pendant leur lecture et leur identification.

3. Dispositif selon la revendication 1, **caractérisé en ce que** le dispositif de transfert (10) présente un plancher de transfert (10) réalisé en forme de V en coupe transversale, dans lequel les branches du V forment un angle droit, et le plancher de transfert est monté de manière pivotante, de telle sorte que l'une ou l'autre branche du V s'étend horizontalement, ou de telle sorte que pour le transfert vers le système d'entrepôt de produits pharmaceutiques ou le retrait à partir du système d'entrepôt de produits pharmaceutiques, les deux branches s'étendent sur un angle de 45° par rapport à l'horizontale.

4. Dispositif selon la revendication 3, **caractérisé en ce que** le plancher de transfert (9) est constitué d'une matière translucide et éclairée par le dessous, et sert en même temps de poste de mesure et d'identification.
